Europäisches Patentamt

European Patent Office

Office européen des brevets

(11) Numéro de publication: **0 333 584**
**A1**

## (12) DEMANDE DE BREVET EUROPEEN

(21) Numéro de dépôt: **89400713.7**

(22) Date de dépôt: **15.03.89**

(51) Int. Cl.4: **C 04 B 28/02**
C 04 B 40/00
//(C04B28/02,14:10,14:42,18:14,
24:26),(C04B28/02,14:10,14:42,
18:14,24:28)

(30) Priorité: **18.03.88 FR 8803556**

(43) Date de publication de la demande:
**20.09.89 Bulletin 89/38**

(84) Etats contractants désignés:
**AT BE CH DE ES FR GB GR IT LI LU NL SE**

(71) Demandeur: **VETROTEX SAINT-GOBAIN**
**10, place Pierre de Coubertin**
**F-73000 Chambéry (FR)**

(72) Inventeur: **Thiery, Jacques**
**15, Allée de la Bure Domaine Plein Soleil**
**F-54270 Essey les Nancy (FR)**

(74) Mandataire: **Breton, Jean-Claude et al**
**SAINT-GOBAIN RECHERCHE 39, quai Lucien Lefranc**
**F-93300 Aubervilliers Cedex (FR)**

(54) Procédé de fabrication d'un mélange à base de ciment, métakaolin, fibres de verre et polymère.

(57) L'invention concerne un procédé de fabrication d'un mélange en vue de la réalisation d'un produit par prise de ciment, dans lequel on mélange les constituants suivants en respectant l'ordre suivant d'introduction de ces constituants dans un malaxeur : environ 35 à environ 55 parties d'eau mélangées à environ 3 à environ 12 parties de polymère, en poids sec de polymère ; de 0 jusqu'à 5 parties d'adjuvant réducteur d'eau ; environ 15 à environ 30 parties de métakaolin ; environ 50 à environ 120 parties de sable siliceux ; et environ 100 parties de ciment. On malaxe ensuite jusqu'à obtention d'une pâte homogène et thixotrope. On incorpore à ladite pâte entre 2 et 15 % en poids de fibres de verre résistant aux alcalins par rapport au poids de ladite pâte.

EP 0 333 584 A1

**Description**

## PROCEDE DE FABRICATION D'UN MELANGE A BASE DE CIMENT, METAKAOLIN, FIBRES DE VERRE ET POLYMERE

La présente invention concerne un procédé de fabrication d'un mélange en phase aqueuse en vue de la réalisation d'un produit par prise de ciment ; ce mélange comprend du ciment, du métakaolin, des fibres de verre résistant aux alcalins et un polymère du type latex acrylique ou styrène butadiène. Elle trouve une application particulièrement importante, bien que non exclusive, dans le domaine des mortiers ou pâtes devant être facilement projetables sur des parois, par exemple verticales, et des bétons hydrauliques devant présenter une bonne résistance au vieillissement tout en étant peu sensibles au transfert hydrique et d'une bonne résistance aux intempéries.

On connaît déjà (FR-A-2 601 356) des produits à base de ciment contenant des fibres de verre résistant aux alcalins, du métakaolin et un polymère de type ci-dessus défini. De tels produits présentent d'excellentes résistances au vieillissement. L'ajout du polymère est destiné à favoriser le mûrissement du produit et à améliorer encore les modules de rupture observés par rapport aux produits démunis de polymère.

Cependant, dans certains cas difficiles de mise en oeuvre du mélange de constitution de tels produits, par projection sur une paroi verticale par exemple, le mélange obtenu peut encore être amélioré.

La présente invention vise à fournir un procédé de fabrication d'un mélange en phase aqueuse en vue de la réalisation d'un produit par prise de ciment, ledit mélange obtenu répondant mieux que ceux antérieurement connus aux exigences de la pratique, notamment en ce qu'il autorise la fabrication plus rapide, moins coûteuse et avec une plus grande régularité et solidité, de pièces en matériau composite à base de ciment renforcé par des fibres de verre.

L'objet de l'invention est atteint par un procédé selon lequel on mélange en phase aqueuse outre le ciment, au moins un métakaolin qui présente une réactivité à l'essai Chapelle modifié supérieure à 500 milligrammes de CaO par gramme de métakaolin, au moins un polymère, du sable, éventuellement au moins un réducteur d'eau et/ou un fluidifiant, éventuellement au moins un adjuvant favorisant le caractère thixotrope du mélange, éventuellement au moins un accélérateur de durcissement, des fibres de verre résistant aux alcalins qui consiste à :

a) mélanger en premier lieu l'eau, le polymère et éventuellement au moins un réducteur d'eau et/ou un accélérateur de durcissement,

b) ajouter le métakaolin et éventuellement un adjuvant favorisant le caractère thixotrope du mélange et poursuivre le mélange,

c) ajouter au mélange précédent le sable, le ciment et éventuellement un fluidifiant, puis malaxer l'ensemble jusqu'à obtention d'une pâte homogène et thixotrope,

d) incorporer les fibres de verre à la pâte obtenue précédemment.

Le mélange réalisé selon ce procédé comprend pour environ 100 parties en poids de ciment environ 35 à 55 parties d'eau, environ 3 à 12 parties en poids sec de polymère, environ 15 à 30 parties de métakaolin, environ 50 à 120 parties de sable siliceux, éventuellement jusqu'à 5 parties de réducteur d'eau et/ou de fluidifiant, enfin de 2 à 15 % en poids de fibres de verre par rapport au poids total de la pâte.

Le mortier obtenu avant mélange avec les fibres de verre se présente, avant durcissement, sous la forme d'une pâte thixotrope, c'est-à-dire ayant au repos l'aspect d'un gel et se fluidifiant rapidement sous l'effet d'une agitation. Avec un tel mortier, il est notamment possible d'effectuer simultanément la projection dudit mortier et la projection de fibres de verre sur des parois verticales hautes de l'ordre de un mètre, sans constater de glissement entraînant un excédent de matière en partie basse et des zones fragiles amincies en partie haute des parois. La stabilité du mélange de l'invention sur le support ou moule permet de réaliser des épaisseurs constantes. Plusieurs couches peuvent être projetées les unes sur les autres, sans qu'il soit nécessaire d'attendre le début de raidissement ou de prise de la couche précédente. Cet avanitage permet de réduire le temps de projection d'environ 15 %.

Le caractère thixotrope du mélange, favorise et accélère l'imprégnation des fibres dans la matrice en ciment par roulage, écourtant ainsi le temps de roulage d'environ de 20 %.

Par rapport aux mélanges classiques utilisés lors de la fabrication de pièces par projection, celui de l'invention permet de réaliser une importante économie de matières : la diminution des pertes de mortier et de fibres de verre est d'au moins 20 % et peut atteindre 40 %.

L'ordre d'incorporation est une caractéristique importante de la présente invention et permet de façon surprenante l'obtention d'un mélange possédant les nombreux avantages que l'on vient de décrire.

Ainsi la présence du polymère dans la composition du mélange initial (a) entraîne et favorise son "moussage" sous l'action mécanique du malaxeur utilisé. Ce phénomène se traduit au niveau du produit final par une structure microporeuse et donc par une densité inférieure à celle d'un produit ordinaire. Pour un volume donné et par rapport à un mélange classique, le gain en masse peut atteindre 10 %. L'ajout de polymère permet également de réduire l'absorption d'eau par le produit final.

L'incorporation de métakaolin dans le mélange au stade (b) augmente l'effet thixotropiant de ce constituant. L'association du polymère au métakaolin, à ce stade du mélange, contribue à l'obtention d'une pâte thixotrope.

Dans un mode préféré de réalisation, le (ou les) polymère (s) est (sont) choisi (s) parmi les polymères suivants : styrène acrylate, styrène butadiène, polyvinylacétate, polychloroprène, acrylique, acrylonitrile, vinyle-acrylique, époxy.

Dans un mode avantageux de réalisation on incorpore les fibres de verre à la pâte par projection simultanée des fibres de verre et de la pâte dans des proportions de fibres de verre comprises en poids entre 4 et 7 % du poids de la pâte. Dans ce mode de réalisation, il est préférable d'utiliser un sable de granulométrie inférieure à environ 2 millimètres et de préférence inférieure à 1 millimètre, et des fibres de verre de longueur sensiblement comprise entre 20 et 40 mm.

Le procédé de fabrication de l'invention est particulièrement intéressant quand il est appliqué à la fabrication d'un produit composite par projection simultanée du mortier ou de la pâte et des fibres du mélange sur un moule ou un support ; mais il permet également de fabriquer avantageusement des produits composites par les méthodes dites de "prémix" ou de "contact".

Le "prémix" ou prémélangeage consiste à disperser des fibres, par exemple sous forme de fils coupés, dans le mortier par malaxage avant l'opération de moulage. Le "contact" ou procédé de stratification, permet de réaliser des couches planes ou à courbure modérée au moyen de nappes de fibres soit posées sur un lit de mortier dans lequel elles sont ensuite incorporées au rouleau, à la taloche ou à la presse, soit recouvertes par un tel lit qui est ensuite aspiré ou poussé à travers elles.

Afin d'obtenir la fluidité voulue pour le mélange et pour permettre une mise en oeuvre optimale qui dépendra entre autres des conditions particulières de ladite mise en oeuvre, c'est-à-dire projection, "prémix" ou "contact", on ajoute au début ou à la fin du procédé de fabrication de la pâte jusqu'à 5 parties d'adjuvant pour 100 parties de ciment. Dans le cas où l'adjuvant est ajouté en début, il est qualifié de réducteur d'eau et dans le cas où il est ajouté à la fin, il est qualifié de fluidifiant. Ces adjuvants tels que les sulfonates sont connus en soi par l'homme du métier.

Si l'on cherche également à accélérer le durcissement, il peut avantageusement être ajouté à l'eau de gâchage jusqu'à 3 parties d'accélérateur de durcissement pour 100 parties de ciment.

En résumé, l'utilisation d'adjuvant dans la présente invention se fait en respectant l'ordre d'insertion suivant :

1) eau + polymère + réducteur d'eau (éventuellement) + accélérateur de durcissement (éventuellement),
2) métakaolin + adjuvants (éventuellement),
3) sable, ciment, fluidifiants (éventuellement),
4) fibres de verre.

La teneur en poids sec de polymère tel qu'habituellement défini par les fabrications et l'homme du métier, à incorporer au mélange selon l'invention, est de l'ordre de 3 à 12 parties en poids de polymère pour 100 parties en poids de ciment, et avantageusement environ 6 à environ 8 parties en poids de polymère.

L'ajout de micro-silice ou fumée de silice jusqu'à de l'ordre de 5 parties en poids pour 100 parties en poids de ciment, et avantageusement entre 0,5 partie et 2 parties, par exemple 1 partie, accentue favorablement l'effet thixotropant obtenu par le procédé de fabrication du mélange selon l'invention. L'ajout est effectué en même temps que le métakaolin. D'autres produits ayant un effet thixotropant (amidon modifié, polyéthylène-glycol) peuvent également être incorporés dans le mélange dans des proportions semblables, voire inférieures.

Le mélange des constituants, autres que les fibres de verre, s'effectue avantageusement à l'aide d'un malaxeur à grande vitesse engendrant une haute turbulence, qui se caractérise par une forte agitation dispersante à l'intérieur du malaxeur. La vitesse de rotation du malaxeur est, de préférence, égale ou supérieure à mille tours par minute.

Une granulométrie du sable telle que le diamètre maximum des grains soit de l'ordre du millimètre (tamis de 1,25 par exemple) est particulièrement avantageuse dans le cas d'un mélange destiné à être projeté. Dans ce cas, la longueur des fibres de verre sera de préférence inférieure à environ 50 mm, par exemple comprise entre environ 20 et 40 mm. Le diamètre des fibres de verre utilisées est en général compris entre 9 à 25 micromètres.

Les quantités de fibres de verre à prévoir dans un mélange selon l'invention sont, en poids par rapport à la pâte, d'environ 4 à environ 7 % pour une utilisation du mélange en projection, d'environ 2 à environ 5 % pour le "prémix", et d'environ 4 à environ 15 % pour le "contact".

Le sable utilisé dans l'invention est siliceux, c'est-à-dire est un sable comprenant plus de 90 % de silice pure.

Par métakaolin ou métakaolinite, il faut entendre le produit activé de la kaolinite, thermiquement ou par tout autre moyen. La formule abrégée du métakaolin peut s'écrire, en utilisant les symboles classiques employés par les cimentiers, $AS_2$ ($A = Al_2O_3$ et $S = SiO_2$). Il s'obtient, par exemple, par traitement thermique de la kaolinite à des températures variant entre 700 et 900°C pendant des durées de quelques heures.

Selon l'invention, le métakaolin utilisé doit présenter une réactivité à l'essai "CHAPELLE" modifiée (voir ci-après) supérieure à 500 mg CaO par gramme de métakaolin.

De façon générale, pour chaque ciment utilisé, on cherchera une consommation de la chaux par le métakaolin aussi complète que possible. Une appréciation de l'activité pouzzolanique de chaque ajout permet donc, en fonction de la chaux $Ca(OH)_2$ à fixer, de doser plus précisément la quantité qu'il faut ajouter. Cette détermination est entre autres évaluée selon l'essai CHAPELLE modifié, tel que décrit par R. LARGENT dans le Bulletin de Liaison des Laboratoires des Ponts et Chaussées, n° 93, janvier - février 1978, pages 63 et 64, qui consiste à évaluer la quantité de CaO, exprimée en mg, potentiellement consommable par 1 g de pouzzolane. A cet effet, on place en contact pendant seize heures, au voisinage de l'ébullition, la matière pouzzolanique et la chaux en suspension dans l'eau. Après refroidissement, on dose la chaux qui n'a pas réagi.

L'invention sera mieux comprise à travers les exemples donnés ci-après à titre illustratif.

La base en ciment est constituée par exemple d'un ciment Portland classique CPA ou d'un ciment CPJ à filler calcaire. La composition du ciment CPA est fournie dans le tableau I. Elle est exprimée en donnant des fourchettes et pourcentage de poids total, la somme des différents pourcentages devant être inférieure à 100 %.

Le verre utilisé lors des essais est un verre alcali résistant ayant plus de 12 % (en poids) de $ZrO_2$ et en particulier de 14 à 21 %.

Afin de mieux faire apparaître les avantages des produits obtenus à partir du mélange selon l'invention par rapport aux produits de l'art antérieur, il est présenté ci-après à titre d'exemple (tableau III) des résultats d'essais obtenus avec trois produits dont la composition est définie dans le tableau II. Le produit n° 3 est obtenu à partir du mélange fabriqué par le procédé de l'invention.

Les deux taux $\tau_1$ et $\tau_{28}$, qui figurent dans le tableau III, représentent le pourcentage pondéral d'absorption d'eau par rapport au poids total du produit fini après 28 jours de mûrissement ; les indices 1 et 28 représentent le nombre de jours d'immersion dans l'eau à 20°C.

Le troisième paramètre $_{MOR}$ donne la baisse relative du module de rupture du produit considéré après 28 jours de mûrissement et 7 jours d'immersion dans l'eau à 20°C (test en flexion tel que défini par la norme BS 6432 de 1984).

La dernière colonne donne la valeur de la masse volumique de chaque produit.

Les comparaisons entre les trois produits montrent l'intérêt d'un produit obtenu par mélange selon l'invention pour lequel l'absorption d'eau et la chute de la résistance à la rupture sont sensiblement diminuées. Le produit n° 3 résultant du mélange selon l'invention présente une masse volumique nettement inférieure à celle des produits de comparaison.

Enfin le tableau V donne une synthèse des résultats obtenus avec les mélanges de l'invention dont les fourchettes des constituants sont rappelées dans le tableau IV.

Dans ce tableau le symbole "MOR" est le module de rupture tel que défini précédemment, le symbole "LOP" désigne la limite de proportionnalité ou d'élasticité lors d'un test en flexion (tel que défini par la norme BS 6432 de 1984). Enfin "ε" désigne en % la déformation à la rupture que peut subir le produit après les durées de mûrissement indiquées dans le tableau.

Les résultats obtenus sont supérieurs en moyenne de 10 à 20 %, à ceux obtenus dans les mêmes conditions pour les produits de l'art antérieur.

## TABLEAU I

| CPA | CaO | $SiO_2$ | $Al_2O_3$ | $Fe_2O_3$ | $SO_3$ | MgO | Alcalin |
|-----|-----|---------|-----------|-----------|--------|-----|---------|
| (%) | 60-70 | 17-25 | 2-8 | 0,15-6 | 1-3 | 0,1-4 | 0,2-1,3 |

## TABLEAU III

| Produits | $\tau_1$ (%) | $\tau_{28}$ (%) | MOR (%) | $m_v$ |
|----------|----------|-----------|---------|-------|
| n° 1 | 1,5 | 10 | 15 | 2,2 |
| n° 2 | 2 | 12 | 18 | 2,1 |
| n° 3 | 1,2 | 6 | 10 | 1,9 |

TABLEAU V

| Durée de mûrissement | à 24 h | à 7 j | à 28 j | à terme |
|---|---|---|---|---|
| MOR module de rupture | ≧ 20 MPa | ≧ 25 MPa | ≧ 30 MPa | ≧ 28 MPa |
| LOP limite de proportionnalité | ≧ 8 MPa | ≧ 10 MPa | ≧ 12 MPa | ≧ 12 MPa |
| (ε) Déformation à la rupture | ≧ 1 % | ≧ 1 % | ≧ 1 % | ≧ 0,7 % |

TABLEAU II

| Produits | Composants | Parties (en poids) |
|---|---|---|
| N° 1 | CPA | 100 |
| | Sable siliceux | 50 |
| | Eau | 32 |
| | Fluidifiant ou réducteur d'eau | 0,5 |
| | Taux de fibres de verre | 6 % en projection |
| N° 2 | CPA | 100 |
| | Sable siliceux | 50 |
| | Métakaolin | 30 |
| | Eau | 46,5 |
| | Fluidifiant ou réducteur d'eau | 1 |
| | Taux de fibres de verre | 6 % en projection |
| N° 3 | CPA | 100 |
| | Sable siliceux | 70 |
| | Métakaolin | 25 |
| | Polymère (latex pur en poids sec) | 6,2 |
| | Eau | 47,6 |
| | Fluidifiant ou réducteur d'eau | 1,8 |
| | Taux de fibres de verre | 6 % en projection |

TABLEAU IV

| Constituants | Parties (en poids) | Parties (en poids) |
|---|---|---|
| Ciment blanc (ou gris) | CPA 55, R ou HPR 100 | CPJ 100 |
| Sable siliceux (0 - 1 mm) | 50 à 100 | 50 à 100 |
| Métakaolin | 15 à 30 | 15 à 30 |
| Fumée de silice | 0 à 5 | 0 à 5 |
| Latex pur (en poids sec) (polymère) | 3 à 10 | 3 à 10 |
| Eau | 35 à 55 | 35 à 55 |
| Adjuvants | | |
| Fluidifiant ou réducteur d'eau | 0 à 5 | 0 à 5 |
| Accélérateur de durcissement | 0 à 3 | 0 à 3 |
| Fibres de verre | 4 à 6 % en poids par rapport au mortier mouillé pour la projection et 2 à 5 % pour le prémix | |

## Revendications

1. Procédé de fabrication d'un mélange en phase aqueuse en vue de réaliser un produit par prise de ciment comprenant outre le ciment, au moins un métakaolin qui présente une réactivité à l'essai Chapelle modifié supérieure à 500 milligrammes de CaO par gramme de métakaolin, au moins un polymère, du sable, éventuellement au moins un réducteur d'eau et/ou un fluidifiant, éventuellement au moins un adjuvant favorisant le caractère thixotrope du mélange, éventuellement au moins un accélérateur de durcissement, des fibres de verre résistant aux alcalins, **caractérisé en ce que :**

a) on mélange en premier lieu l'eau, le polymère et éventuellement, le réducteur d'eau et/ou l'accélérateur de durcissement,

b) on ajoute le métakaolin et éventuellement un adjuvant favorisant le caractère thixotrope du mélange et on poursuit le mélange,

c) on ajoute au mélange précédent le sable, le ciment et éventuellement un fluidifiant, puis on malaxe l'ensemble jusqu'à obtention d'une pâte homogène et thixotrope,

d) on incorpore les fibres de verre à la pâte obtenue précédemment.

2. Procédé selon la revendication 1, **caractérisé en ce que** pour environ 100 parties en poids de ciment, on utilise environ 35 à 55 parties d'eau, environ 3 à 12 parties en poids sec de polymère, environ 15 à 30 parties de métakaolin, environ 50 à 120 parties de sable siliceux, éventuellement jusqu'à 5 parties de réducteur d'eau et/ou de fluidifiant, enfin de 2 à 15 % en poids de fibres de verre par rapport au poids total de la pâte.

3. Procédé suivant la revendication 2, **caractérisé en ce qu'**on incorpore les fibres de verre à la pâte par projection simultanée des fibres de verre et de ladite pâte sur un moule, dans des proportions de fibres de verre de 4 à 7 % en poids par rapport au poids de la pâte.

4. Procédé selon la revendication 2, **caractérisé en ce qu'**on incorpore les fibres de verre à la pâte par pré-mélangeage dans des proportions de fibres de verre comprises entre 2 et 5 % en poids par rapport au poids de la pâte.

5. Procédé selon la revendication 2, **caractérisé en ce qu'**on incorpore les fibres de verre à la pâte par "contact" dans des proportions de fibres de verre comprises entre 4 et 15 % en poids par rapport au poids de la pâte.

6. Procédé selon la revendication 2, **caractérisé en ce que** le polymère utilisé est choisi parmi les polymères suivants : styrène acrylate, styrène butadiène, polyvinylacétate, polychloroprène, acrylique, acrylonitrile, vinyle-acrylique, époxy.

7. Procédé selon la revendication 2, **caractérisé en ce qu'**on ajoute en même temps que le métakaolin de la microsilice jusqu'à de l'ordre de 5 parties en poids pour 100 parties en poids de ciment et avantageusement entre 0,5 parties et 2 parties, par exemple 1 partie.

8. Procédé selon la revendication 3, **caractérisé en ce qu'**on utilise un sable siliceux de granulométrie inférieure à 2 millimètres environ et avantageusement inférieure à 1 millimètre et des fibres de verre de longueur sensiblement comprise entre 20 et 40 millimètres.

Office européen
des brevets

# RAPPORT DE RECHERCHE EUROPEENNE

Numero de la demande

EP 89 40 0713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 252 848 (VETROTEX SAINT-GOBAIN) * Revendications 1,8-10 * + FR-A-26 01 356 (Cat. D) --- | 1,2,6,7 | C 04 B 28/02 C 04 B 40/00 // (C 04 B 28/02 |
| Y | GB-A-2 148 871 (PILKINGTON BROTHERS) * Revendications 1,8 * --- | 1,2,6,7 | C 04 B 14:10 C 04 B 14:42 C 04 B 18:14 |
| A | FR-A-2 149 998 (NAT. RESEARCH AND DEVELOPMENT CORP.) * Revendication 15 * --- | 1 | C 04 B 24:26 ) (C 04 B 28/02 C 04 B 14:10 |
| A | EP-A-0 222 339 (NITTO BOSEKI) * Revendications 22,23 * --- | 1 | C 04 B 14:42 C 04 B 18:14 C 04 B 24:28 ) |
| A | CH-A- 237 342 (G. WALTER et al.) * Revendications * --- | 1 | |
| A | FR-A-2 578 778 (SOC. AUXILIAIRE D'ENTREPRISES) * Résumé * --- | 6 | |

DOMAINES TECHNIQUES
RECHERCHES (Int. Cl.4)

C 04 B 28
C 04 B 40
B 28 B

| A | CHEMICAL ABSTRACTS, vol. 102, no. 10, 1985, page 296, résumé no. 83525y, Columbus, Ohio, US; & JP-A-59 184 283 (KYOKADO ENGINEERING CO., LTD) 19-10-1984 --- | 1 |
|---|---|---|
| A | CHEMICAL ABSTRACTS, vol. 95, no. 1, 1981, page 282, résumé no. 11599q, Columbus, Ohio, US; & JP-A-81 09 263 (MATSUSHITA ELECTRIC WORKS, LTD) 30-01-1981 ----- | 1 |

**Le présent rapport a été établi pour toutes les revendications**

| Lieu de la recherche | Date d'achèvement de la recherche | Examinateur |
|---|---|---|
| LA HAYE | 08-06-1989 | DAELEMAN P.C.A. |

EPO FORM 1503 03.82 (P0402)